# EUROPEAN PATENT APPLICATION

(11) **EP 3 873 019 A1**
(43) Date of publication of application: **01.09.2021**
(21) Application number: 20160166.3
(22) Date of filing: 28.02.2020
(51) Int. Cl.: H04L 5/00, H04L 25/02, H04L 27/26, H04W 72/04, H04B 7/024

(54) **A DISTRIBUTED UNIT FOR MANAGING A PLURALITY OF RADIO UNITS AND A METHOD THEREOF**

(71) Applicant: Siemens Aktiengesellschaft, 80333 München (DE)
(72) Inventor: Chorppath, Anil Kumar, 76187 Karlsruhe (DE); Kloiber, Bernhard, 83620 Feldkirchen-Westerham (DE); Thakur, Anagha, 76135 Karlsruhe (DE); Nhili, Saad, 70806 Kornwestheim (DE); Richerzhagen, Björn, 85049 Ingolstadt (DE)

(57) **Abstract**

The current invention discloses a distributed unit for managing a plurality of radio units connectable to end devices. The distributed unit is configured to receive, at a first-time instance, a first channel quality information from a first radio unit and a second channel quality information from a second radio unit, in a relation to the first end device; generate a schedule for joint transmission of packets to the first end device using the first radio unit and the second radio unit; detect, at a second time instance, a change in the first channel quality information; and modify the generated schedule based on the detected change in the first channel quality information by releasing resources at one of the first radio unit and the second radio unit and allocating one or more additional resources at the other of the first radio unit and the second radio unit.

## Description

### Background

The current disclosure relates to wireless communication techniques in industrial environments. Due to the nature of industrial applications, associated communications must provide high availability and reliability. To address availability and reliability, a plurality of diversity mechanisms are utilized. However, there are certain disadvantages associated with such techniques. For example, time-based diversity techniques usually increase latency and are therefore not suitable for low-latency applications. Similarly, spatial diversity techniques usually come along with high demands on the timing and phase coherency requirements and require high data rate on the fronthaul network. These requirements get especially stringent when the user equipment (UEs) are moving, which is often the case with industrial devices such as Automated Guided Vehicles (AGVs), movable robots, etc.

### Description

A plurality of wireless communication techniques are utilized in industrial environments. One such set of techniques relate to Coordinated Multi-Point transmission and reception (also referred to as COMP). Coordinated Multi-Point (CoMP) solutions are mainly based on interconnecting multiple base stations via the backhaul network or on implementing a centralized solution with Radio Units (RU) that are connected to a Base Band Unit (BBU) through digital RF links/protocols like CPRI. Largely, COMP techniques may be divided into two categories: joint processing and coordinated scheduling/ beamforming. Joint processing techniques are based on the simultaneous transmission of the same signal by different base stations entities, which allows to remove the interference and improve the quality of the received signal. Coordinated Scheduling/Beamforming (CS/CB) mechanism is based on the transmission of the signal by a single base station entity. However, different base station entities coordinate amongst themselves on frequency band allocation and precoding for beamforming, etc., for reducing interference.

These solutions require very high data rates, often in the range of tens of Gigabits per second on the backhaul or fronthaul network. Additionally, for some joint processing techniques, there are stringent requirements on various aspects such as synchronization, mutual phase coherency of the cooperating Rus, detailed channel quality information, etc. For meeting these stringent requirements, a very fast fronthaul connection is required. However, in existing industrial environments, it may be difficult for the existing network infrastructure to support these high data rates or fast connections, without costly overhaul and upgrades. Accordingly, there is a need for a system and method that addresses the above-mentioned issues.

Accordingly, the current disclosure proposes a distributed unit for managing a plurality of radio units, the plurality of radio units connectable to one or more end devices. The distributed unit comprises a network interface connectable to the plurality of radio units and one or more processors connected to the network interface and a memory module. The processors are configured to receive, at a first time instance, a first channel quality information from a first radio unit from the plurality of radio units in relation to a first end device and a second channel quality information from a second radio unit from the plurality of radio unit; in a relation to the first end device. Then, the one or more processors generate a schedule for joint transmission of a set of packets to the first end device using the first radio unit and the second radio unit. The schedule includes a reservation of a first set of resources at the first radio unit and a second set of resources at the second radio unit based on the first and second channel quality information. Then, at a second time instance, the processors detect a change in the first channel quality information via the first radio unit. Accordingly, based on the detected change in the first channel quality information, the processors modify the generated schedule. Modifying the generated schedule comprises releasing one or more resources from one of the first set of resources at the first radio unit and the second set of resources at the second radio unit and allocating one or more additional resources to the other of the first set of resources at the first radio unit and the second set of resources at the second radio unit. Accordingly, the current invention discloses a centralized manner of scheduling and coordinated transmission via the distributed unit which is adaptable in run time and does not require high data rate front haul networks.

In an embodiment, the one or more processors are configured to determine a length of a cyclic prefix based on a time synchronization error and a signal length of a composite channel impulse response. Accordingly, the determined length of the cyclic prefix is then used the radio units of the serving cluster to mitigate inter symbol interference and improve communication reliability.

In an embodiment, wherein the first radio unit and the second radio unit are configured to transmit the set of packets to the first end device using a beamforming technique.

In an advantageous example, the one or more processors are configured to select one of the first radio unit and the second radio unit as a serving radio unit based on reference signal received power at the first end device. The serving radio unit acts as coordinating radio unit for the serving cluster and is capable of performing one or more activities on behalf of the distributed unit.

In an advantageous example, the one or more processors are configured to transmit the set of packets as MAC service data units via the network interface to the first and second radio units. A functional split option 6 according to 3GPP proposals in TR 38.801, is realized in the base station 120 between the distributed units and the radio units. Accordingly, this enables utilization of low data rate front haul networks without affecting efficiency.

In an example, the one or more processors are configured to modify the generated schedule mid transmission of the first set of packets to the first end device. Accordingly, the processors are configured to adapt communication based on change in channel quality information. In an illustrative example, the first end device is automated guided vehicle and is at a first location at the first-time instance and is at a second location, at the second time instance.

In an example, the one or more processors are further configured to receive at the first time instance, a third channel quality information from a third radio unit from the plurality of radio units in relation to the first end device and select the first and second radio units from the first, second and third radio units, for transmitting the plurality of packets to the first end device based on the first, second and third channel quality information. Accordingly, a plurality of radio units may be used to optimally serve a first end device.

In an example, the one or more processors are further configured to generate a serving cluster using the selected first radio unit and the second radio unit, wherein the serving cluster is for transmitting the plurality of packets to the first end device. Accordingly, a plurality of radio units may be grouped into a cluster used to optimally serve a first end device by enabling beamforming amongst the radio units of the cluster to improve signal strength at the receiver of the first end device.

In an example, the network interface of the distributed unit is based on network functional application platform interface (nFAPI).

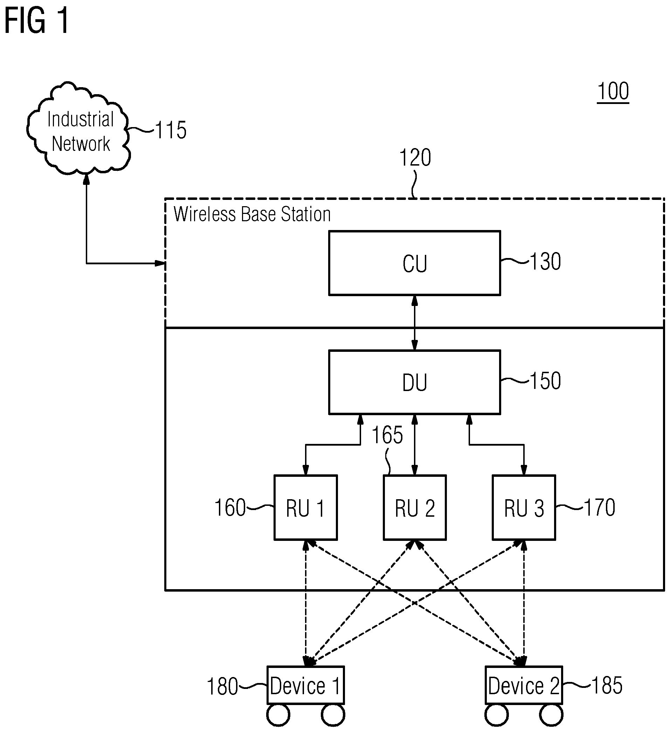

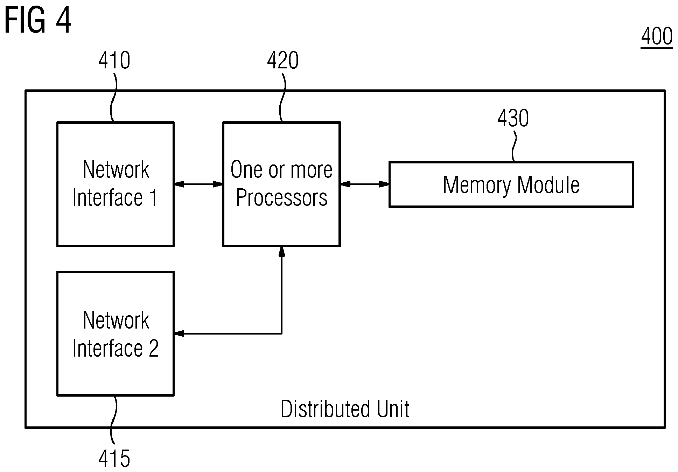

In another aspect, the current invention discloses a method for managing a plurality of radio units of a private network cell, the plurality of radio units connectable to one or more end devices. The method comprises receiving, at a first time instance, a first channel quality information from a first radio unit from the plurality of radio units; in relation to a first end device and a second channel quality information from a second radio unit from the plurality of radio unit in a relation to the first end device; generating a schedule for joint transmission of a set of packets to the first end device using the first radio unit and the second radio unit, wherein the schedule includes a reservation of a first set of resources at the first radio unit and a second set of resources at the second radio unit based on the first and second channel quality information; detecting at a second time instance, a change in the first channel quality information via the first radio unit; and modifying the generated schedule based on the detected change in the first channel quality information, wherein modifying the generated schedule comprises releasing one or more resources from one of the first set of resources at the first radio unit and the second set of resources at the second radio unit and allocating one or more additional resources to the other of the first set of resources at the first radio unit and the second set of resources at the second radio unit. These aspects are further described in relation figures 1-4.

The following detailed description references the drawings, wherein:
Figure 1 illustrates an example base station for transmitting packets to one or more end devices;
Figure 2 illustrates an example method for managing a plurality of radio units of the example base station;
Figure 3 illustrates an example wireless protocol stack associated with the example base station; and
Figure 4 illustrates an example distributed unit of the example base station.

Figure 1 illustrates an example wireless base station 120 in an industrial facility 100. Industrial facility 100 herein refers to any environment where one or more industrial processes such as manufacturing, refining, smelting, assembly of equipment may take place and includes process plants, oil refineries, automobile factories, etc. The industrial facility may comprise a plurality of control devices connected to a plurality of field devices for monitoring and regulating one or more industrial processes in the industrial facility.

The wireless base station 120 is connectable to one or more industrial devices in the industrial facility 100. In an example, the wireless base station 120 is a part of a public cellular network. In another example, the wireless base station 120 is a part of a non-public network. The wireless base station 120 is connected to a segment 115 of an industrial network. Industrial network herein refers to any electronic data network and accordingly includes office campus networks, industrial automation networks, private radio networks.

The wireless base station 120 comprises a central unit 130, one or more distributed units (shown in figure 1 as distributed unit 150), and one or more radio units (shown in figure 1 as radio units 160, 165 and 170). The central unit 140 processes non-real time protocols and services, and the distributed unit 150 processes physical level protocols and latency-critical real time services. The radio units (160, 165, and 170) carry out link layer and physical layer signal processing when transmitting and receiving radio signals. In an example, the connections between the various radio units (160, 165, and 170) and the distributed unit 140 are based on ethernet. Similarly, the connection between the distributed unit 150 and the central unit 140 is based on ethernet. In another example, the connections between the various radio units (160, 165, and 170), distributed units and the central unit are based on fiber optic. A plurality of well-known protocols (such as CPRI) may be used for communication over these connections.

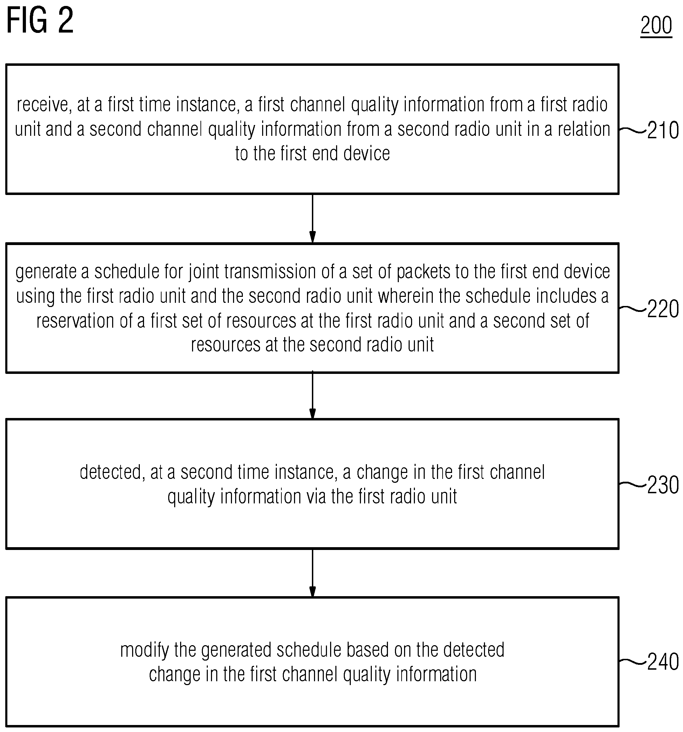

The radio units (160, 165, and 170) are configured to be connected to the one or more industrial devices (180 and 185) for sending and receiving one or more packets. The radio units (160, 165, and 170) are capable using one or more coordinated multipoint transmission and reception (COMP) techniques for transmitting packets to the industrial devices. The distributed unit (for example distributed unit 150) is capable of managing the plurality of radio units (160, 165, and 170) and scheduling packet transmission using the one or more radio units to the one or more end devices. This is further elaborated in reference to figure 2.

Figure 2 illustrates a method 200 for managing a plurality of radio units (160, 165, 170) of the private network cell. In an example, the method is realized by the distributed unit 150. The distributed unit 150 is configured to send one or more packets received from the segment 115 to one or more end devices (180, 185) using the one or more radio units (160, 165, 170). In an example, the first end device 180 is an automated guided vehicle capable of moving along a first route in the industrial facility 100.

At step 210, the distributed unit 150 receives at a first time instance a first channel quality information from a first radio unit 160 from the plurality of radio units (160, 165, 170); in relation to a first end device (180) and a second channel quality information from a second radio unit 165 from the plurality of radio unit (160, 165, 170); in a relation to the first end device 180. Channel quality information (CQI; also referred to as channel quality indicator) herein refers to information indicative of the quality of the channel between the corresponding radio unit and the corresponding end device. In an example, the channel quality information (CQI) may be determined by end device in relation the corresponding radio unit and is determined by on basis of signal-to-noise ratio (SNR), signal-to-interference plus noise ratio (SINR), and signal-to-noise plus distortion ratio (SNDR). Then, the determined channel quality information is forwarded to the distributed unit 150. In an example, the first end device 180 is at a first position at the first-time instance and is the process of moving towards a second position.

Then, at step 220, the distributed unit 150 generates a schedule for joint transmission of a set of packets to the first end device 180 using the first radio unit 160 and the second radio unit 165. In an example, the set of packets is from the segment 115. The schedule includes a reservation of a first set of resources at the first radio unit 160 and a second set of resources at the second radio unit 165 based on the first and second channel quality information for transmission of the set of packets to the first end device 180. Accordingly, based on the schedule, the transmission of the packets to the end device 190 happens via the first radio unit 160 and the second radio unit 165 using one or more beamforming techniques. For the constructive beamforming in non-coherent coordinated multi point transmission and reception, source carriers from the first and second radio units, are modulated with identical information, which add up in the receiver antenna of the first end device.

Then, at step 230, the distributed unit 150 detects, at a second time instance, a change in the first channel quality information via the first radio unit (160). The change in the first channel quality information is precipitated by the movement of the first end device from the first position to the second position. There may be one or more interfering objects due to which the first channel quality information changes. In an example, channel quality information is periodically determined by the end device 180 in relation to the corresponding radio units (160, 165). Accordingly, the end device 180 determines the first channel quality information in relation to the first radio unit 160 and the second channel quality information in relation to the second radio unit 165 periodically. When the value of the channel quality information (the first channel quality information or the second quality information) changes from the previously determined value, the end device 180 notifies the distributed unit 150 about the changed value of the corresponding channel quality information. In the current case, the end device 180 determines a change in the value of the first channel quality information and accordingly informs the distributed unit 150 regarding the change in the first channel quality information.

Then at step 240, based on the detected change in the first channel quality information, the distributed unit 150 modifies the generated schedule. The distributed unit 150 modifies the generated schedule by releasing one or more resources from one of the first set of resources at the first radio unit (160) and the second set of resources at the second radio unit (165) and allocating one or more additional resources to the other of the first set of resources at the first radio unit (160) and the second set of resources at the second radio unit (165).

In an example, the detected change in the first channel quality information is indicative of a decrease in the quality of the channel between the first radio unit 160 and the end device 180 from the first-time instance to the second time instance. Accordingly, in the current example, the distributed unit 150 modifies generated schedule by releasing one or more resources from the first set of resources of the first radio unit 160 and by reserving additional resources of the second radio unit 165 to compensate for the released resources of the first radio unit 160.

In another example, the detected change in the first channel quality information is indicative of an increase in the quality of the channel between the first radio unit 160 and the end device 180 from the first time instance to the second time instance. Accordingly, in the current example, the distributed unit 150 modifies generated schedule by releasing one or more resources from the second set of resources of the second radio unit 165 and by reserving additional resources of the first radio unit 160 to compensate for the released resources of the second radio unit 165.

In an example, in addition to the first and second channel quality information associated with the first radio unit 160 and the second radio unit 165, the distributed unit 150 receives a third channel quality information indicative of a channel quality between a third radio unit 170 and the first end device 180. Then, based on the first, second and third channel quality information, the distributed unit 150 generates a cluster of radio units (also referred to as serving cluster) for transmitting packets to the first end device 180. Each radio unit from the generated cluster has a value of channel quality information greater than a predefined threshold. For example, based on the above-mentioned channel quality information, the distributed unit 150 generates the serving cluster comprising the first and the second radio units (160 and 165). Then, the distributed unit 150 selects a radio unit from the serving cluster as the serving radio unit. In an example, the distributed unit 150 selects the radio unit with the highest value of reference signal received power at the first end device. The serving radio unit coordinates with the distributed unit 150 for management and operation of the serving cluster.

In an example, for generating the schedule for join transmission, the distributed unit 150 coordinates with the serving radio unit to determine radio units with high CQI for the corresponding end device and are available for transmission of the packets. Accordingly, the distributed unit 150 determines the first and second radio units from the serving cluster for transmission of the packets. Additionally, the distributed unit 150 identifies the first and second radio units based on the individual CQI associated with the corresponding radio unit and the first end device and the potential composite channel strength from beamforming from the first and the second radio units.

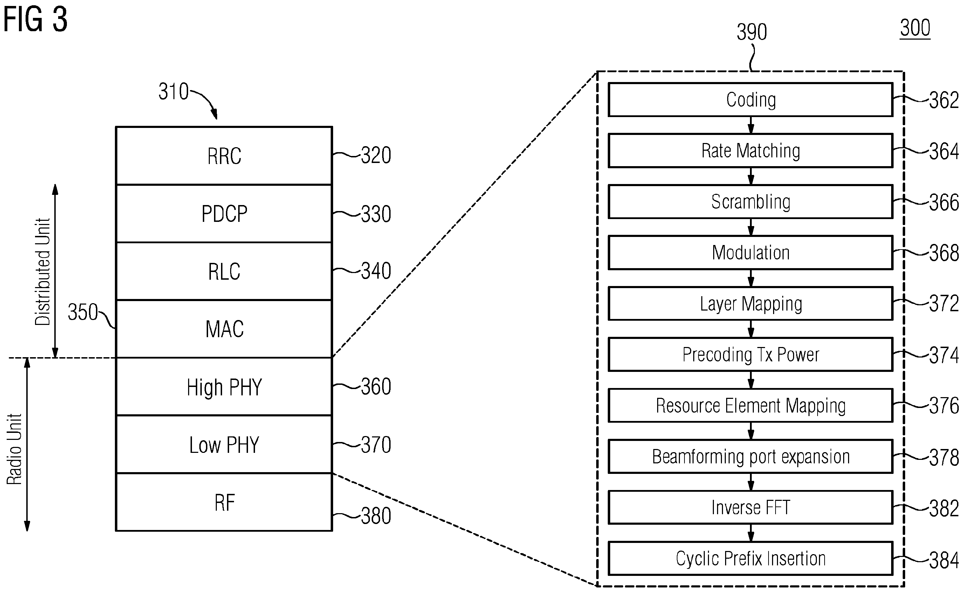

In an embodiment, a functional split option 6 is realized in the base station 120. This is described in relation to figure 3. Figure 3 illustrates a wireless protocol stack 310 comprising six protocol layers including radio resource control protocol (RRC) 320, Packet Data Convergence Protocol (PDCP) 330, Radio Link Control protocol (RLC) 340, Media Access Control protocol (MAC) 350, high physical layer protocol (High PHY) 360, low physical layer protocol (Low PHY) 370, and radio layer (RF) 380. Accordingly, the high physical and low physical layers 360 and 370 along with the radio layer 380 of the wireless protocol stack are implemented in the radio units of the serving cluster. Accordingly, the distributed unit 150 transmits a plurality of medium access control service data units (MAC SDUs) to the serving cluster for transmission to the first end device. The operations and functions in relation to lower layer protocols (higher physical layer, lower physical layer and the radio layer 360, 370 and 380) are realized by the radio units. For example as shown in figure 3, the functions 390 associated with the high and low physical layers 360 and 370 are realized by the radio units of the serving cluster. Accordingly, subsequent to receiving the MAC SDUs from the distributed unit 150, functions such as coding 362, rate matching 364, scrambling 366, modulation 368, layer mapping 372,precoding transmission power 374, resource element mapping 376, beamforming port expansion 378, inverse fast fourier transform (inverse fft) 382, and cyclic prefix insertion 384 are performed by the radio units on the received MAC SDUs.

In yet another example, the distributed unit 150 is configured to determine a length of cyclic prefix to be used in the OFDM transmission used by the radio units of the serving cluster associated with the first end device. Cyclic prefix, as commonly understood, is the samples provided at the beginning of the actual signal samples. The cyclic prefix is provided to act as a guard interval to eliminate inter symbol interference. For determining the length of the cyclic prefix, the distributed unit 150 is configured to a maximum time synchronization error between the radio units of the serving cluster.

Then, the distributed unit 150 determines the signal length (also referred to as delay spread) of composite channel impulse response amongst the signals from the radio units of the serving cluster to the first end device. In an example, the distributed unit 150 determines the signal length of the composite channel impulse response is determined based on the plurality of channel quality information associated with radio units from the first end device. Then, based on the time synchronization error and the signal length of composite channel impulse response, the distributed unit 150 determines the cyclic prefix. In an embodiment, the distributed unit 150 determines a value of the length of cyclic prefix such that the length of the cyclic prefix is greater than the sum of the time synchronization error and the signal length of composite channel impulse response. Subsequent to the determination of the length of cyclic prefix, the distributed unit 150 transmits the determined length of the cyclic prefix to the radio units of the serving cluster. The determined length of the cyclic prefix is used by the radio units for append a cyclic prefix of the determined length to the beginning and end of the actual signals to be sent to the first end device. In an embodiment, to determine the time synchronization error and the signal length of composite channel impulse response, the distributed unit 150 coordinates with the serving radio unit of the serving cluster. In another embodiment, the distributed unit 150 modifies the sub-carrier spacing parameter to impact the cyclic prefix length. By lengthening or shortening the sub-carrier spacing (SCS), the distributed unit can shorten or lengthen the length of the cyclic prefix respectively.

The present disclosure can take a form of a computer program product comprising program modules accessible from computer-usable or computer-readable medium storing program code for use by or in connection with one or more computers, processing units, or instruction execution system. For example, the distributed unit 150 may be realized across one or more devices. For example, accordingly, the current disclosure as describes a distributed unit device 400. The device 400 implements the method 200. The device 400 includes one or more network interfaces (410,415), one or more processors 420 and a non-transitory storage medium 430. The non-transitory storage medium 430 contains a plurality of instructions for implementing the method 200.

Upon execution of the instructions in the memory module 430, the one or more processors 420 are configured to receive, at a first time instance, a first channel quality information from a first radio unit from the plurality of radio units in relation to a first end device and a second channel quality information from a second radio unit from the plurality of radio unit; in a relation to the first end device. Then, the one or more processors generate a schedule for joint transmission of a set of packets to the first end device using the first radio unit and the second radio unit. The schedule includes a reservation of a first set of resources at the first radio unit and a second set of resources at the second radio unit based on the first and second channel quality information. Then, at a second time instance, the processors detect a change in the first channel quality information via the first radio unit. Accordingly, based on the detected change in the first channel quality information, the processors modify the generated schedule. Modifying the generated schedule comprises releasing one or more resources from one of the first set of resources at the first radio unit and the second set of resources at the second radio unit and allocating one or more additional resources to the other of the first set of resources at the first radio unit and the second set of resources at the second radio unit.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A distributed unit (150) for managing a plurality of radio units (160, 165, 170), the plurality of radio units (160, 165, 170) connectable to one or more end devices (180, 185); the distributed unit (150) comprising:
a. a network interface connectable to the plurality of radio units (160, 165, 170); and
b. one or more processors connected to the network interface and a memory module, the processors configured to:
i. receive, at a first time instance, a first channel quality information from a first radio unit (160) from the plurality of radio units (160, 165, 170); in relation to a first end device (180) and a second channel quality information from a second radio unit (165) from the plurality of radio unit (160, 165, 170), in a relation to the first end device (180);
ii. generate a schedule for joint transmission of a set of packets to the first end device (180) using the first radio unit (160) and the second radio unit (165), wherein the schedule includes a reservation of a first set of resources at the first radio unit (160) and a second set of resources at the second radio unit (165) based on the first and second channel quality information;
iii. detect, at a second time instance, a change in the first channel quality information via the first radio unit (160); and
iv. modify the generated schedule based on the detected change in the first channel quality information, wherein modifying the generated schedule comprises releasing one or more resources from one of the first set of resources at the first radio unit (160) and the second set of resources at the second radio unit (165) and allocating one or more additional resources to the other of the first set of resources at the first radio unit (160) and the second set of resources at the second radio unit (165).

2. The distributed unit (150) as claimed in claim 1, wherein the one or more processors are configured to determine a length of a cyclic prefix based on a time synchronization error and a signal length of a composite channel impulse response based on the first and second channel quality information.

3. The distributed unit (150) as claimed in claim 1, wherein the first radio unit (160) and the second radio unit (165) are configured to transmit the set of packets to the first end device (180) using a beamforming technique.

4. The distributed unit (150) as claimed in claim 1, wherein the one or more processors are configured to transmit the set of packets as MAC service data units via the network interface to the first and second radio units.

5. The distributed unit (150) as claimed in claim 1, wherein the one or more processors are configured to select one of the first radio unit (160) and the second radio unit (165) as a serving radio unit based on reference signal received power at the first end device.

6. The distributed unit (150) as claimed in claim 1, wherein the one or more processors are configured to modify the generated schedule mid transmission of the first set of packets to the first end device (180).

7. The distributed unit (150) as claimed in claim 1, wherein the first end device (180) is automated guided vehicle and is at a first location at the first-time instance and is at a second location, at the second time instance.

8. The distributed unit (150) as claimed in claim 1, wherein the one or more processors are further configured to receive at the first time instance, a third channel quality information from a third radio unit (170) from the plurality of radio units (160, 165, 170) in relation to the first end device (180) and select the first and second radio units (160, 165)from the first, second and third radio units (160, 165, 170), for transmitting the plurality of packets to the first end device (180) based on the first, second and third channel quality information.

9. The distributed unit (150) as claimed claim 1, wherein the network interfaces is based on network functional application platform interface (nFAPI).

10. The distributed unit (150) as claimed in claim 8, wherein the one or more processors are further configured to generate a serving cluster using the selected first radio unit and the second radio unit (160, 165), wherein the serving cluster is for transmitting the plurality of packets to the first end device (180).

11. A method (200) for managing a plurality of radio units (160, 165, 170) of a private network cell, the plurality of radio units (160, 165, 170) connectable to one or more end devices (180, 185), the method (200) comprising:
a. receiving (210), at a first time instance, a first channel quality information from a first radio unit (160) from the plurality of radio units (160, 165, 170); in relation to a first end device (180) and a second channel quality information from a second radio unit (165) from the plurality of radio unit (160, 165, 170); in a relation to the first end device (180);
b. generating (220) a schedule for joint transmission of a set of packets to the first end device (180) using the first radio unit (160) and the second radio unit (165), wherein the schedule includes a reservation of a first set of resources at the first radio unit (160) and a second set of resources at the second radio unit (165) based on the first and second channel quality information;
c. detecting (230) at a second time instance, a change in the first channel quality information via the first radio unit (160); and
d. modifying (240) the generated schedule based on the detected change in the first channel quality information, wherein modifying the generated schedule comprises releasing one or more resources from one of the first set of resources at the first radio unit (160) and the second set of resources at the second radio unit (165) and allocating one or more additional resources to the other of the first set of resources at the first radio unit (160) and the second set of resources at the second radio unit (165) .

12. The method (200) as claimed in claim 11, wherein the method further comprises selecting one of the first radio unit (160) and the second radio unit (165) as a serving radio unit based on reference signal received power at the first end device.

13. The method (200) as claimed in claim 11, wherein the method (200) further comprises modifying the generated schedule mid transmission of the first set of packets to the first end device (180).

14. The method (200) as claimed in claim 11, wherein the first end device (180) is automated guided vehicle and is at a first location at the first-time instance and is at a second location, at the second time instance.

15. The method (200) as claimed in claim 11, wherein the method comprises receiving at the first time instance, a third channel quality information from a third radio unit (170) from the plurality of radio units (160, 165, 170) in relation to the first end device (180) and selecting the first and second radio units (160, 165)from the first, second and third radio units (160, 165, 170), for transmitting the plurality of packets to the first end device (180) based on the first, second and third channel quality information.

16. The method (200) as claimed in claim 15, wherein the method (200) further comprises generating a cluster of radio units from the first, second and third radio unit (160, 165, 170) wherein each radio unit from the cluster of radio units has a corresponding channel quality information associated with the first end device, greater than a predetermined threshold.
